Europäisches Patentamt

European Patent Office

Office européen des brevets

(11) Veröffentlichungsnummer: **0 273 335**
**A2**

(12) **EUROPÄISCHE PATENTANMELDUNG**

(21) Anmeldenummer: **87118909.8**

(22) Anmeldetag: **19.12.87**

(51) Int. Cl.⁴: **C02F 1/52 , B01J 20/32**

(30) Priorität: **27.12.86 DE 3644579**

(43) Veröffentlichungstag der Anmeldung:
**06.07.88 Patentblatt 88/27**

(84) Benannte Vertragsstaaten:
**AT BE CH DE ES FR GB IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Meffert, Alfred, Dr.**
**Marie-Curie-Strasse 10**
**D-4019 Monheim(DE)**
Erfinder: **Syldatk, Andreas, Dr.**
**Am Nettchesfeld 25**
**D-4000 Düsseldorf(DE)**
Erfinder: **Amberg, Günther**
**Bahnhofstrasse 38**
**D-4040 Neuss 22(DE)**
Erfinder: **Engelskirchen, Konrad, Dr.**
**Gonellastrasse 24**
**D-4005 Meerbusch 3(DE)**
Erfinder: **Fues, Johann Friedrich, Dr.**
**Otto-Hahn-Strasse 157**
**D-4000 Düsseldorf(DE)**

(54) **Neue Flockungs- und Filtrierhilfsmittel und ihre Anwendung.**

(57) Für die Flockung von Trübstoffen und particulären Feststoffen aus Flüssigphasen mit Hilfe polykationischer Polymerverbindungen werden weniger störanfällige Flockungsmittel zur Verfügung gestellt. Dies gelingt dadurch, daß die Hilfsmittel in den zu klärenden Flüssigphasen wenigstens weitgehend unlösliche Feststoffe sind, die wenigstens an ihrer Oberfläche eine polykationische Ausrüstung aufweisen und dabei als Feststoffpartikel solcher Größe vorliegen, daß eine Mehrzahl der abzutrennenden Trübstoffteilchen bzw. partikulären Verunreinigungen auf der Oberfläche eines polykationischen Partikels gebunden werden kann.

EP 0 273 335 A2

## Neue Flockungs-und Filtrierhilfsmittel und ihre Anwendung

Die Erfindung betrifft neue Hilfsmittel zur erleichterten Flockung und Abtrennung von Trübstoffen, aber auch größeren partikulären suspendierten Feststoffen aus Flüssiphasen, deren Abtrennung beispielsweise durch Filtration Schwierigkeiten bereitet. Aufgrund der besonderen Beschaffenheit der im nachfolgenden beschriebenen Flockungshilfsmittel können diese auch in breiter Anwendung generell als Filtrierhilfsmittel zum Einsatz kommen.

Flüssigphasen mit einem Gehalt an kolloiddispersen und feinstsuspendierten Schwebstoffen lassen sich ohne Einsatz von Hilfsmitteln bekanntlich schwer klären. Die Stabilität der auszuflockenden Teilchen beruht insbesondere auf gleichsinnigen elektrostatischen Ladungen der Teilchen, die in den meisten Fällen eine negative Ladung ist. Zur erleichterten Abtrennung solcher Schwebstoffe bzw. Verunreinigungen verwendet die Praxis verschiedene Flockungsmittel und Flockungshilfsmittel.

Die Flockung durch Adsorptionskoagulation wird üblicherweise durch Zugabe von Eisen(III)-oder Aluminiumsalzen unter Ausbildung entsprechender Hydroxidfällungen durchgeführt. Die entstehenden Hydroxide reißen mittels ihrer großen Oberfläche einen beträchtlichen Teil der abzutrennenden Verunreinigungen aus der Feinstsuspension und erleichtern die gewünschte Phasentrennung.

Von solchen Flockungsmitteln im engeren Sinne sind die meist auf synthetisch organischer Grundlage aufgebauten Flockungshilfsmittel zu unterscheiden. Meist handelt es sich hierbei um in Wasser lösliche Polymere mit sehr hoher Molekülmasse, die natürlichen und/oder synthetischen Ursprungs sein können. Synthetische Flockungshilfsmittel übertreffen die durch einfache Ausfällung wirkenden zuvor genannten Flockungsmittel in ihre anwendungstechnischen Wirksamkeit bedeutend. Hochmolekulare wasserlösliche Syntheseprodukte dieser Art lassen sich in die Klassen der neutralen Flockungshilfsmittel, der polyanionischen Flockungshilfsmittel und der polykationischen Flockungshilfsmittel unterscheiden. Einzelheiten hierzu siehe beispielsweise in Ullmann's Enzyklopädie der technischen Chemie, 4. Auflage (1976), Band 11, Seiten 581 bis 586 sowie die dort zitierte Literatur.

Für den Mechanismus der Flockung selbst hat sich die Annahme einer Brücildung durchgesetzt. Ein gelöstes Molekül des Flokkungshilfsmittels muß genügend groß sein, um an zumindest 2 zu koagulierenden Kolloidteilchen adsorbiert werden zu können. Dabei werden die Kolloidteilchen miteinander verknüpft. Bei geeigneten Konzentrationen bilden sich genügend viele Brücken aus, um eine vollständige Agglomeration zu bewirken. Die Bildung großer und stabiler Flocken bewirkt die Sedimentation und eine verbesserte Filtrierbarkeit. Aus diesem Grund haben besonders wirksame Flokkungsmittel extrem hohe Molekülmassen bis in die Größenordnung von 10.000.000. Zwingend bleibt allerdings nach bisherigen Vorstellungen die Wasserlöslichkeit des Flockungshilfsmittels als die Flockung einleitender Verfahrensschritt. Das kann zu unerwünschten Schwierigkeiten führen:

Ist die Konzentration an gelöstem Flockungshilfsmittel zu hoch, so wird jedes Teilchen der abzutrennenden suspendierten Phase von den hydrophilen Polymeren wie von einem Schutzkolloid eingehüllt, ohne daß es zu einer Brückenbildung kommt. Das Ergebnis ist die Stabilisierung der Kolloide. Dementsprechend müssen in der Praxis die Flockungshilfsmittel stets so im Trüben eingetragen werden, daß eine lokale Überkonzentration des Flockungshilfsmittels vermieden wird.

Die Erfindung geht von der Aufgabe aus, Hilfsmittel für eine weniger störanfällige Flockung von Trüben bzw. partikulären Feststoffen aus Flüssigphasen zur Verfügung zu stellen. Die technische Konzeption der erfindungsgemäßen Lehre geht dabei von der Tatsache aus, daß Trüben der hier betroffenen Art in Flüssigphasen in aller Regel durch elektronegative Aufladung der abzutrennenden Kolloid-bzw. Feststoffteilchen gekennzeichnet sind oder gewünschtenfalls auch in ansich bekannter Form einfach in einen solchen Zustand umzuladen sind. Hierzu bedarf es bekanntlich lediglich der Einstellung eines pH-Wertes im Bereich von schwach sauer über neutral bis in den alkalischen Bereich, wobei auch die Mitverwendung geeigneter löslicher Komponenten, z.B. geeigneter anorganischer Salze in geringen Konzentrationen, den negativen Ladungszustand des Partikelschmutzes beeinflussen, insbesondere erhöhen kann. Die Erfindung macht sich weiterhin das bekannte Wissen zunutze, daß eine elektrostatische Wechselwirkung zwischen den abzutrennenden Trübstoffen und dem Flockungshilfsmittel ein wichtiges Teilelement in dem Ablauf des Flockungsvorgangs sein kann.

Die technische Lösung der erfindungsgemäßen Aufgabe geht von der Erkenntnis aus, daß die wirkungsvolle Flockung mittels polykationischer Komponenten die Löslichkeit dieser Hilfsmittel in der zu reinigenden Flüssigphase dann nicht erfordert, wenn bestimmte Grundvoraussetzungen eingehalten werden, die im nachfolgenden geschildert sind.

Gegenstand der Erfindung sind dementsprechend in einer ersten Ausführungsform Flockungs-und Filtrierhilfsmittel zur erleichterten Abtrennung von Trübstoffen und partikulären Feststoffen aus Flüssigphasen auf Basis organischer polykationischer Polymerverbindungen, wobei das Kennzeichen der Erfindung darin liegt, daß die neuen Hilfsmittel in den zu klärenden Flüssigphasen wenigstens weitgehend unlösliche Feststoffe sind, die weiterhin wenigstens an ihrer Oberfläche eine polykationische Ausrüstung aufweisen und dabei schließlich als Feststoffpartikel solcher Größe vorliegen, daß eine Mehrzahl der abzutrennenden Trübstoffteilchen bzw. partikulären Verunreinigungenn auf der Oberfläche jeweils eines bestimmten polykationischen Partikels gebunden werden kann.

Im Gegensatz zu den geschilderten Arbeitsweisen aus dem Stand der Technik sieht das erfindungsgemäße Handeln die Ausgestaltung und den Einsatz der neuen Flockungshilfsmittel als unlöslichen Feststoff vor, der in den zu klärenden Flüssigphasen - auch unter den jeweils gewählten Behandlungsbedingungen - nicht oder praktisch nicht löslich ist. Das Flockungshilfsmittel muß dabei in Form von Feststoffpartikeln einer vorgeschriebenen Mindestgröße vorliegen. Die durchschnittliche Partikelgröße des unlöslichen Flockungshilfsmittels muß in der Lage sein, eine Mehrzahl der abzutrennenden Trübstoffteilchen bzw. partikulären Verunreinigungen auf dem jeweils betroffenen Partikel des Flockungshilfsmittels zu binden. Diese Anbindung der Trübstoffteilchen erfolgt dabei unmittelbar oder in einer im nachfolgenden noch geschilderten mittelbaren Form über die polykationische Ausrüstung des Flockungshilfsmittels, die als flockungsaktive Materialschicht wenigstens an der Oberfläche der unlöslichen Feststoffpartikel des Flockungshilfsmittels gebunden ist.

Es hat sich gezeigt, daß die Anwendung der erfindungsgemäßen Flockungshilfsmittel für die Praxis beträchtliche Vorteile gegenüber den bis heute üblichen löslichen Polymerverbindungen mit sich bringen kann. Die Aktivität des Flockungshilfsmittels und im gewissen Sinne auch seine spezifische Wirkung gegenüber den unterschiedlichen Trüb-bzw. Schmutzstoffen läßt sich durch die jeweils gewählte spezifische Ausgestaltung der flockungsaktiven Oberfläche der neuen Hilfsmittel in weiten Grenzen steuern, so daß jeweils hochaktive Hilfsstoffe der neuen Art zur Verfügung gestellt werden können. Stets gilt dabei aber übereinstimmend die Vorschrift der Unlöslichkeit des Hilfsmittels in der zu reinigenden Flüssigphase. Es hat sich gezeigt, daß hierdurch die Abtrennbarkeit des durch Flockung ausgebildeten Niederschlages substantiell verbessert werden kann.

Soll beispielsweise die Abtrennung der ausgebildeten Flockung mittels Filtration erfolgen, so ist für die vorbekannte Flockungstechnik bekannt, daß entsprechende Niederschläge verhältnismäßig rasch zu einem Verschluß der Filterporen führen können und damit den Filtrationsprozeß behindern. Demgegenüber zeichnen sich geflockte Niederschläge, die mit den erfindungsgemäß unlöslichen Flockungshilfsmitteln erzeugt worden sind, üblicherweise durch gute Filtrierbarkeit bei raschem Durchfluß der geklärten Filtratphase selbst dann aus, wenn bereits dicke Schichten des geflockten Niederschlages auf der Filterfläche ausgebildet sind.

Die bevorzugten flockungsaktiven polykationischen Ausrüstungen der neuen unlöslichen Flockungshilfsmittel sind durch das Vorliegen einer Vielzahl von quartären Ammoniumgruppen und/oder basischen Aminogruppen wenigstens an der Oberfläche der einzelnen Partikel des Flockungshilfsmittels gekennzeichnet. In einer besonders bevorzugten Ausführungsform enthält das unlösliche neue Flockungshilfsmittel eine Vielzahl von immobilisierten quartären Ammoniumgruppierungen, und zwar insbesondere auch und gerade an seiner Oberfläche. Das jeweilige Partikel des neuen Flockungshilfsmittels kann damit auch als polymere quartäre Ammoniumverbindung angesprochen werden, die im nachfolgenden der Einfachheit halber als "PQAV" bezeichnet wird. Neben oder anstelle eines solchen PQAV-Ausrüstung können wenigstens an der Oberfläche der unlöslichen Feststoffteilchen basische Aminogruppen vorgesehen sein, die bekanntlich ebenfalls zu polykationisch hohen Ladungsdichten führen können. Beispiele hierfür sind Polyalkylenimin-Verbindungen, insbesondere Polyethylenimin-Gruppierungen, die gewünschtenfalls in ihren sekundären Aminogruppen ganz oder teilweise durch Substitutionsreaktion zum tertiären Amin umgewandelt sind.

Die im Sinne der Erfindung unlöslichen flockungsaktiven polykationischen Komponenten können als solche das neue Flockungshilfsmittel in seiner Gesamtheit bilden. Es ist dann das jeweilige Partikel als Ganzes aus entsprechenden unlöslichen polykationischen Verbindungen gebildet.

In einer weiteren und in der Regel wichtigeren Ausführungsform des erfindungsgemäßen Handelns wird jedoch nur ein Teil des jeweiligen unlöslichen Hilfsstoffpartikels durch das flockungsaktive polykationische Material gebildet. Der Rest ist ein Trägermaterial, das sich seinerseits durch Unlöslichkeit in den zu reinigenden Flüssigphasen auszeichnet, im übrigen aber in vielgestaltigster Weise variiert und modifiziert werden kann, wodurch eine hohe Variationsbreite in der Ausgestaltung und Wirksamkeit der jeweils gewählten Flockungs-und Filtrierhilfsmittel gemäß der Erfindung eingestellt werden kann.

Die flockungsaktive polykationische Materialschicht (PQAV und/oder Polyaminokomponente) liegt in dieser Ausführungsform wenigstens als Außenfläche des jeweiligen unlöslichen Feststoffpartikels vor. Der Trägerkern - in der bevorzugten Ausführungsform die Hauptmasse des Fällungshilfsmittels -unterliegt bezüglich seiner chemischen und/oder physikalischen Beschaffenheit keinen Einschränkungen, so lange

3

unerwünschte Interaktionen mit den zu behandelnden Flüssigphasen ausgeschlossen und das Erfordernis der Unlöslichkeit sichergestellt sind.

Dieser Trägerkern kann dabei im Sinne der Erfindung in vielgestaltigster Weise variiert werden. Die folgenden Beispiele seien erwähnt:

Durch Wahl des spezifischen Gewichtes des Trägerkerns kann Einfluß auf das Verhalten der geflockten Masse in der Flüssigphase genommen werden. Spezifisch schwere Trägermaterialien - beispielsweise die im nachfolgenden im einzelnen noch geschilderten mineralischen Trägermaterialien - führen zur erleichterten Abtrennung einer Flockung aus wässriger Phase durch Absetzen. Werden vergleichsweise leichte Trägerstoffe gewählt, deren Dichte etwa im Bereich des Wassers bzw. der jeweils zu reinigenden Flüssigphase oder gar darunter liegt, dann kann das Aufschwimmen des geflockten Niederschlages - beispielsweise im Rahmen von Flotationsverfahren - substantiell erleichtert werden.

Der Trägerkern der erfindungsgemäßen Flockungs-und Filtrierhilfsmittel kann aber auch in ganz anderer Weise angestrebte Reinigungsprozesse unterstützen bzw. verbessern:

Der Träger kann so ausgebildet werden, daß er seinerseits bestimmte Sammleraktivitäten zur Verfügung stellt und damit in den Reinigunsprozeß einbringt. So ist es beispielsweise bekannt, quellfähige Schichtsilikate organophil auszurüsten, wodurch ihre Aufnahmefähigkeit gegenüber Fettverschmutzungen substantiell angehoben wird. Werden entsprechende unlösliche feinteilige Sammler im erfindungsgemäßen Sinne in der Außenschicht noch mit einer geeigneten flockungsaktiven polykationischen Ausrüstung versehen, so wird ein multifunktionelles Hilfsmittel geschaffen, das der erfindungsgemäßen Definition des polykationisch wirksamen Flockungshilfsmittels entspricht, darüberhinaus aber weiterführende Reinigungsaufgaben erfüllen kann.

Die Immobilisierung der flockungsaktiven polykationischen Gruppen an bzw. auf dem unlöslichen Feststoff kann auf chemischem und/oder physikalischem Wege erfolgen. Voraussetzung ist lediglich, daß unter den jeweiligen Anwendungsbedingungen des Flockungshilfsmittels die hinreichende Immobilisierung dieser flockungsaktiven Materialschicht am unlöslichen Partikel gewährleistet ist. Diese Zuordnung von Immobilisierung der flockungsaktiven Gruppen einerseits und der Unlöslichkeit des Gesamtpartikels andererseits zu den im Einzelfall zu wählenden Arbeitsbedingungen bei dem Einsatz der erfindungsgemäßen Flockungs-und Filtrierhilfsmittel ist ein wesentliches Element der Erfindung. Das wird sofort aus folgendem ersichtlich:

Es ist bekannt, pulverförmige Stärke durch Umsetzung mit Quaternierungsmitteln oberflächlich zu quaternieren. Verbindungen dieser Art sind beispielsweise zur Verhinderung des Farbstoffübertrages von anionischen Farbstoffen in Waschflotten vorgeschlagen worden. Die Verwendung derart quaternierter Stärke in wässriger Lösung, auch bei nur mäßig erhöhten Temperaturen, führt zur anteilsweisen Verkleisterung und damit zum Übergehen wenigstens eines Anteils des Stärkemoleküls in den wasserlöslichen Zustand. Insoweit ist aus der Instabilität des Trägers gegenüber dem zu reinigenden Medium unter den hier geschilderten Arbeitsbedingungen die erfindungsgemäße Forderung der Unlöslichkeit nicht mehr gewährleistet.

Zum Aufbau und zur Herstellung der erfindungsgemäßen Flockungs-und Filtrierhilfsmittel gelten die nachfolgenden allgemeinen Angaben:

In einer ersten Unterteilung der in die erfindungsgemäße Definition fallenden Materialien lassen sich zwei Ausgestaltungen unterscheiden. In der ersten Ausgestaltung ist das als Flockungshilfsmittel dienende unlösliche Feststoffpartikel in seiner Gesamtheit aus einer entsprechend unlöslichen oder unlöslich gemachten polykationischen Verbindung gebildet. Hier liegen entsprechende polykationische Gruppierungen also nicht nur an der Oberfläche sondern auch im Inneren des jeweiligen Feststoffteilchen vor.

In einer zweiten und im allgemeinen bevorzugten Ausführungsform liegt die bereits angesprochene Ausgestaltung vor, daß auf einen unlöslichen Feststoffträger die polykationische Ausrüstung in bevorzugt dünner Schicht aufgetragen und hier immobilisiert ist. Für die Flockung und damit für die Klärung der Flüssigphasen ist insbesondere die Interaktion zwischen den Trübstoffen und der Feststoffoberfläche des eingetragenen Flockungsmittels bedeutungsvoll, so daß also eine entsprechende Ausrüstung der Oberfläche des Flockungsmittels hinreichend ist. Es leuchtet ein, daß auf diese Weise eine optimale Ausnutzung des polykationischen Materials bzw. Materialanteils ermöglicht wird, so daß schon aus wirtschaftlichen Überlegungen in der Regel dieser Ausführungsform besondere Bedeutung zukommt.

Für diese zuletzt geschilderte Ausführungsform der oberflächlichen Ausrüstung der festen unlöslichen Hilfsstoffe im Sinne der Erfindung lassen sich wieder zwei generelle Ausgestaltungen unterscheiden. In der ersten Ausführungsform wird die polykationische Oberflächenausrüstung dadurch erreicht, daß durch geeignete Anbindung eine Vielzahl der gewünschten polykationischen Gruppen an der Feststoffoberfläche hinreichend fest verankert wird. Am Beispiel der Herstellung eines entsprechenden Materials mit einer PQAV-Ausrüstung sei das aufgezeigt: Ein aufgrund seiner chemischen Konstitution reaktionfähiger

4

unlöslicher Grundstoff wird mit einem üblichen Quaternierungsmittel unter Anbindung von einer Vielzahl von quartären Ammoniumgruppen auf der Oberfläche des unlöslichen Reaktanten umgesetzt. Als unlöslicher Reaktant ist beispielswiese körnige oder pulvrige Cellulose geeignet, die in ansich bekannter Weise mit einem handelsüblichen Quaternierungsmittel, beispielsweise mit 3-Chlor-2-Hydroxypropyltrimethylammoniumchlorid umgesetzt wird. Anstelle von Cellulose können unlösliche Cellulosederivate oder beliebige andere unlösliche und/oder unlöslich gemachte Naturstoffe und/oder Syntheseprodukte eingesetzt werden, die an ihrer Oberfläche reaktive Gruppen für eine solche Anbindung der polykationischen Elemente aufweisen. Geeignet sind beispielsweise der Cellulose vergleichbare andere polysaccharidartige Naturstoffe bzw. ensprechend unlöslich gemachte Naturstoffderivate. Vernetzte Guar-Abkömmlinge sind hier als Beispiel zu nennen. Aber auch ein teil-oder vollsynthetisches Material, das beispielsweise mit einer reaktiven, vernetzten Polymerhülle eingeschlossen ist, entspricht den Voraussetzungen für die Herstellung von Flokkungshilfsmitteln nach der hier geschilderten Ausführungsform.

In einer anderen Ausführungsform der erfindungsgemäßen flockungsaktiven Hilfsstoffe wird von dem zuletzt angesprochenen Umhüllungsprinzip Gebrauch gemacht. Trägerstoffe beliebiger Ausgestaltung können mit vorgebildeten polykationischen Polymerverbindungen in ansich bekannter Weise umhüllt werden, woraufhin diese flockungsaktive Materialschicht auf der Oberfläche der Feststoffpartikel in hinreichender Form zu immobilisieren ist. Es leuchtet ein, daß hierdurch eine besonders große Variationsbreite in der Ausgestaltung des Eigenschaftsbildes der Flockungshilfsmittel möglich wird. Einerseits ist die praktisch freie Wahl des Trägerkernes mit seinen ihm innewohnenden Eigenschaften gegeben, zum anderen besteht freie Wahlmöglichkeit in der Wahl der flockungsaktiven polykationischen Ausrüstung und deren optimale Anpassung an das im Einzelfall gewünschte Arbeitsergebnis.

Der unlösliche Kern des Flockungshilfsmittels kann organischer und/oder anorganischer Natur sein, soweit sichergestellt ist, daß das ausgewählte Material in den zu behandelnden Flüssigphasen auch unter den Behandlungsbedingungen hinreichend unlöslich ist. Die Verfestigung des vorgebildeten polykationischen Polymeren auf der Oberfläche solcher unlöslicher Träger kann ihrerseits unter Einsatz von chemischen und/oder physikalischen Bindungsprinzipien verwirklicht werden. So kann beispielsweise ein unlöslicher Träger gewählt werden, der salzbildende Gruppen, insbesondere Säuregruppen enthält, die dann bei der Beschichtung mit einem vorgebildeten polykationischen Polymeren, insbesondere entsprechenden PQAV-Verbindungen und/oder basische Aminogruppen enthaltenden Polymeren, zu einer Fixierung unter Salzbildung führen.

Möglich ist aber auch der Auftrag entsprechender - bevorzugt löslicher - vorgebildeter polykationischer Polymerverbindungen auf die Feststoffoberfläche und deren anschließende Reaktion unter Molekülvergrößerung bis zur hinreichenden Unlöslichkeit. Diese chemische Reaktion ursprünglich löslicher oder hinreichend quellbarer polykationischer Polymerverbindungen kann beispielsweise mit üblichen Vernetzungsmitteln wie Epichlorhydrin oder Glyoxal vorgenommen werden, so daß letztlich auch auf diese Weise die gewünschten Flockungsmittel mit ihrer flockungsaktiven immobilisierten Ausrüstung auf der Oberfläche des unlöslichen Feststoffträgers entstehen.

Allgemeines chemisches Wissen ermöglicht damit, daß für den erfindungsgemäßen Zweck alle die aus dem Stand der Technik bekannten, insbesondere oligomeren und/oder polymeren polykationischen Komponenten verwendet werden können, die ursprünglich in löslicher Form vorliegen, dann aber in der geschilderten Weise in den unlöslichen Zustand überführt werden. Anhand der im Rahmen der Erfindung wichtigen flockungsaktiven PQAV-Komponenten sei das unter Bezugnahme auf eine Reihe von Literaturstellen aus dem Stand der Technik im einzelnen beschrieben.

Aus der umfangreichen einschlägigen Literatur seien die folgenden Druckschriften beispielhaft benannt, deren Offenbarung hiermit ausdrücklich auch zum Gegenstand der Offenbarung der vorliegenden Erfindungsbeschreibung zur Struktur der PQAV gemacht wird: US-PSen 3 589 978, 3 632 559, 3 910 862, 4 157 388, 4 240 450 und 4 292 212, GB-PS 1 136 842, DE-AS 27 27 255, sowie die darin benannte US-PS 3 472 840.

Geeignete ursprünglich wasserlösliche oder auch wasserunlösliche PQAV im Sinne der Erfindung haben bevorzugt ein durchschnittliches Molgewicht von wenigstens etwa 200, vorzugsweise von wenigstens etwa 300 und insbesondere von wenigstens etwa 1000. Die obere Grenze der PQAV ist im Grunde bedeutungslos und liegt beispielsweise bei 10 Millionen oder auch bei weit höheren Werten. Verständlich ist das aus der erfindungsgemäß geforderten Bedingung der Unlöslichkeit der PQAV. Ist diese sichergestellt, sind dem Molekulargewicht nach oben keine Grenzen gesetzt.

Nach geeigneter, im folgenden geschilderter Aufbereitung für die Zwecke der Erfindung sind als zunächst wasserlösliche, dann aber auf einem unlöslichen Träger immobilisierte PQAV alle Polymeren geeignet, die entweder in der Polymerkette oder an die Polymerkette gebunden quartäre Ammoniumgruppen tragen. Solche quartären Ammoniumgruppen können sich auch von zyklisch gebundenem Stickstoff ableiten. Beispiele für solche quartäre Ammoniumgruppen sind entsprechende Glieder von 5-oder 6-gliedrigen Ringsystemen, z.B. von Morpholin-, Piperidin-, Piperazin-oder Indazol-Ringen. Zahlreiche Beispiele für solche wasserlöslichen PQAV sind z.B. in der US-PS 4 240 450 näher beschrieben.

Bevorzugt geeignet können Homo-oder Mischpolymerisate mit zyklischen Einheiten sein, wie sie im einzelnen aus der US-PS 3 912 808 bekannt sind. Handelsprodukte dieser Struktur sind z.B. Merquat[R]100 und Marquart[R]550 (Quaternium 41).

Weitere bevorzugt geeignete PQAV sind beispielsweise Celluloseether, deren Anhydroglucose-Einheiten über Äthersauerstoff gebundene Substituenten mit quartären Ammoniumgruppen tragen. Solche Polymeren sind z.B. aus der US-PS 3 472 840 bekannt. Ein Handelsprodukt mit dieser Struktur ist z.B. das Polymer-JR[R]400.

Weitere besonders geeignete kationische Polymeren sind z.B. die aus der US-PS 3 910 862 bekannten und z.B. unter der Handelsbezeichnung Gafquat[R] 734 und 755 erhältlichen quartären Polyvinylpyrolidon-Copolymerisate und die aus der US-PS 4 157 388 bekannten und z.B. unter der Handelsbezeichnung Mirapol [R]A15 erhältlichen quartären polymeren Harnstoffderivate. Geeignete Copolymerisate mit polykationischem Charakter sind auch die in der offengelegten Europäischen Patentanmeldung 0 153 146 beschriebenen Polyacrylamid-Copolymeren, die insbesondere neben wenigstens 50 Mol% Acrylamid-Einheiten bis zu 50 Mol% eines quaternisierten Aminoalkylesters von Acrylsäure oder Methacrylsäure enthalten. Diese Copolymeren sind wasserlöslich.

Als Ausgangsmaterial bevorzugt geeignete PQAV sind solche Verbindungen, die in fester Form Schwierigkeiten bei der Auflösung in Wasser bereiten. Solche kationischen Polymeren sind vor allem die beispielsweise aus der GB-PS 1 136 842 bekannten kationischen Polygalactomannan-Derivate.

Galactomannane sind Polysaccharide, die in den Endospermzellen vieler Leguminosensamen vorkommen, die aber im industriellen Maßstab nur aus Johannesbrotkernmehl (locust bean gum), Guar-Gummi (guar gum) und Tara-Gummi (tara gum) gewonnen werden. Sie sind aufgebaut aus einer linearen Mannan-Hauptkette, bestehend aus beta-(1.4)-glycosidisch verknüpften Mannopyranosebausteinen, an die als Verzweigung einzelne Galactopyranose-Reste in alpha-(1.6)-glycosidischer Bindung fixiert sind. Die einzelnen Polygalactomannane unterscheiden sich hauptsächlich durch das Mannose-Glactose-Verhältnis. Die kationischen Derivate der Polygalactomannane werden hergestellt durch Umsetzung von Hydroxylgruppen des Polysaccharids mit reaktiven quartären Ammoniumverbindungen. Als reaktive quartäre Ammoniumverbindungen eignen sich z. B. solche der allgemeinen Formel

$$R^1 - \overset{\overset{\displaystyle R^2}{\displaystyle |}}{\underset{\underset{\displaystyle R^4}{\displaystyle |}}{N^{(+)}}} - R^3 \quad Z^{(-)}$$

in der $R^1$, $R^2$ und $R^3$ z. B. Methyl-oder Ethylgruppen und $R^4$ eine Epoxyalkylgruppe der Formel

$$\underset{\underset{\displaystyle O}{\displaystyle \diagup\diagdown}}{CH_2 - CH} - R^5 -$$

oder eine Halohydringruppe der Formel

$$X - CH_2 - \underset{\underset{\displaystyle OH}{\displaystyle |}}{CH} - R^5$$

bedeuten und in welchen $R^5$ eine Alkylengruppe mit 1 - 3 C-Atomen, X = Chlor oder Brom und Z ein Anion wie z. B. Chlorid, Bromid, Jodid oder Hydrogensulfat ist. Der Substitutionsgrad sollte wenigstens 0,01 und bevorzugt wenigstens 0,05 sein und liegt typischerweise zwischen 0,05 und 0,5. Ein besonders geeignetes quartäres Ammoniumderivat eines Polygalactomannans ist z. B. das Guar-hydroxypropyl-trimethylammoniumchlorid, welches an die Sauerstoffatome der Hydroxylgruppen des Polysaccharids gebundene kationische Gruppen der Formel

$-CH_2 -CH(OH) - CH_2 -N^{(+)}-(CH_3)_3 \; Cl^{(-)}$

trägt. Solche kationischen Guar-Derivate sind z. B. unter der Handelsbezeichnung "Cosmedia Guar C 261" auf dem Markt. Der Substitutionsgrad (DS) von Cosmedia Guar C 261 liegt bei etwa 0,07. Auch die Handelsprodukte "Jaguar C-13" (DS = 0,11 - 0,13) und "Jaguar C 13 S" (DS = 0,13) gehören diesem Typ an.

Ein wichtiges Einsatzgebiet der hier aus dem Stand der Technik beispielhaft zitierten PQAV-Komponenten ist das Gebiet kosmetischer Präparate, insbesondere zur Behandlung bzw. Konditionierung von Haar. Es ist ein bekanntes Charakteristikum der PQAV, daß sie zum Aufziehen auf Feststoffoberflächen befähigt sind, wobei diese Fähigkeit insbesondere auch in Gegenwart üblicher tensidischer Komponenten gegeben sein kann. Je nach Konstitution ist dabei das Aufziehvermögen und die Haftfestigkeit der PQAV auf der Feststoffunterlage unterschiedlich stark ausgeprägt. Für das Verhalten der PQAV unter der Einwirkung wässrig-tensidischer Bäder kann allerdings auch die Interaktion mit insbesonderer aniontensidischen Komponenten ausschlaggebende Bedeutung haben. Bei stöchiometrischen oder annähernd stöchiometrischen Mengen der aniontensidischen Komponenten bildet sich in aller Regel an der quartären Ammoniumgruppe das entsprechende Aniontensidsalz aus. Solche PQAV-Aniontensidsalze zeigen im allgemeinen eine stark verringerte Wasserlöslichkeit. Es bilden sich entsprechende Niederschläge, vergleiche hierzu beispielsweise die deutsche Offenlegungsschrift 22 42 914.

Bekannt ist allerdings in diesem Zusammenhang weiterhin, daß durch Überschüsse, insbesondere beträchtliche Überschüsse des Aniontensides, eine Wiederauflösung der primär ausgefällten PQAV-Aniontensidsalze bedingt sein kann, vergleiche hierzu die Veröffentlichung in "Seifen/Öle/Fette/Wachse" 1985, 529-532 und 612-614. Beschrieben wird hier insbesondere die Bildung solubilisierender Komplexe mit Micellstruktur des Aniontensid/PQAV-Komplexes bei einem Überschuß der Aniontenside. Für die erfindungsgemäßen Zwecke kann also eine Immobilisierung solcher prinzipiell löslicher PQAV-Komponenten mittels Salzbildung über die quartäre Ammoniumgruppierung im Sinne entsprechender Aniontensid-Salze nur dann in Betracht kommen, wenn unter den zu erwartenden Anwendungsbedingungen nicht mit Überschüssen von zusätzlichen Aniontensiden in den zu reinigenden Flüssigphasen zu rechnen ist. In der Praxis wird von dieser Möglichkeit allerdings in einer ganzen Reihe von Fällen Gebrauch gemacht werden können.

Für eine weiterführende Verfestigung der vorgebildeten polykationischen Komponenten auf einem Trägerkern stehen die bereits erwähnten Prinzipien der chemischen Anbindung bzw. Molekülvergrößerung bis zum Zustand der Unlöslichkeit, insbesondere mittels difunktioneller Reaktionskomponenten und/oder die salzförmige Anbindung zur Verfügung.

In dieser zuletzt genannten Ausführungsform erfolgt die Verfestigung einer polymeren polykationischen flockungsaktiven Beschichtung auf einem formgestalteten Grundkörper dadurch, daß in bzw. an der Oberfläche des Grundkörpers anionische Gruppierungen ausgebildet werden bzw. vorliegen. Beispiele für solche anionischen Gruppierungen sind Carboxylgruppen, die beispielsweise durch Carboxymethylierung in die Oberfläche des Grundkörpers eingeführt werden können, oder andere Säuregruppierungen wie Sulfosäurereste. Weiterführende Angaben finden sich beispielsweise in der US-PS 3 694 364. Die kationische PQAV-Beschichtung bindet sich dann salzartig an diese Gegenionen der Matrix, so daß auf diese Weise der verfestigte Verbund zwischen unlöslichem Festkörper und aufgetragener PQAV-Schicht geschaffen wird. Lediglich beispielhaft für diese Ausführungsform sei ein Grundkörper auf Basis von Cellulosefasern genannt, bei dem freie Carboxylgruppen in das Cellulosemolekül eingeführt worden sind. Möglich ist das beispielsweise auf zwei verschiedenen Wegen:
-durch physikalische Inkorporation von Carboxylgruppen tragenden Verbindungen in die Viskose, d.h. in eine als Cellulosexanthogenat gelöste Cellulose unter Bildung sogenannter inkorporierter Cellulosefasern oder
-durch chemische Umsetzung (Verätherung) der faserbildenden Cellulose der Carboxylgruppen tragenden Reagentien unter Bildung von einheitlich mit z.B. Carboxyalkylgruppen der Formel

$-(CH_2)_n-COOH,$

in der n einen Wert von 1 bis 3 haben kann, modifizierten Cellulosefasern.

Die physikalische Inkorporation Carboxylgruppen tragender Verbindungen in die Viskose wird z.B. durch Beimischen von Alkalisalzen von Acrylsäure-Homopolymerisaten, Acrylsäure-Methacrylsäure-Copolymerisaten, Methylvinylether-Maleinsäureanhydrid-Copolymerisaten, Alginsäure oder Carboxymethylcellulose zur Viskoselösung und anschließendes Verspinnen in üblicher Weise in ein Fällungsbad erreicht. Handelsprodukte auf Basis solcher Cellulosefasern als auch auf Basis der mit Carboxymethylgruppen modifizierten Fasern sind für viele Anwendungszwecke erhältlich. In der hier geschilderten Ausführungsform werden solche Fasern bzw. daraus hergestellte Trägermaterialien mit einer unlöslichen PQAV-Schicht überzogen und damit für den Einsatzzweck unlösbar verbunden.

Die Schichtstärke der flockungsaktiven Ausrüstung auf der Oberfläche des unlöslichen partikulären Flockungshilfsmittels im Sinne der Erfindung kann ansich in beliebigen Grenzen gehalten werden. Berücksichtigt man, daß weitgehend Wechselwirkungen über Oberflächenkräfte für die Flockungskräfte entscheidend sein können, dann bietet sich schon aus Gründen der Wirtschaftlichkeit ein möglichst dünner Auftrag der flockungsaktiven Ausrüstung an.

Im Falle der unmittelbaren chemischen Substitution der Feststoffoberfläche, beispielsweise mit einer Vielzahl von quartären Ammoniumgruppierungen, ergibt sich von vornherein eine dünne Schichtstärke, die bis in den Bereich monomolekularer Schichten reichen kann. Der Substitutionsgrad in diesen Außenschichten kann bis zur theoretischen Grenzmöglichkeit reichen, wenngleich sich - umgerechnet auf das Gesamtmaterial - vergleichsweise niedere Substitutionsgrade errechnen, die beispielsweise 1 und vorzugsweise 0,5 im Falle der Cellulose oder vergleichbarer Polysaccharide bzw. Polysaccharidderivaten nicht überschreiten. Schon vergleichsweise niedere Substitutionsgrade im Bereich von etwa 0,01 bis 0,5 und insbesondere solche im Bereich von 0,1 bis 0,4 führen hier zu hochwirksamen Flockungshilfsmitteln im Sinne der Erfindung.

Werden vorgebildete Polymere auf die Oberfläche von unlöslichen Feststoffen aufgebracht und hier immobilisiert, so wird die Dicke der Schichtlage des Polymeren Werte von etwa 1mm und bevorzugt etwa 0,5 mm nicht überschreiten. Insbesondere können auch wesentlich dünnere Schichtlagen eingesetzt werden, die beispielsweise unter 0,1 mm liegen und beispielsweise im Schnitt im Bereich von 0,001 bis 0,05 mm Stärke ausgebildet sein können. Aber auch noch dünnere durchschnittliche Schichtdicken führen zu wirkungsvollen Flockungshilfsmitteln. Die Anzahl der flockungsaktiven kationischen Gruppen bestimmt sich durch die Zusammensetzung des vorgebildeten Polymeren. Werden beispielsweise Copolymerisate eines Monomeren mit einer quartären Ammoniumgruppierung im Molekül mit Comonomeren, die von diesen reaktiven Gruppen frei sind, eingesetzt, so können beispielsweise Mischungsverhältnisse dieser Monomertypen von 10 : 90 bis 90 : 10 und insbesondere 10 bis 60 Anteile des quartäre Ammoniumgruppen enthaltenden Monomers auf 90 bis 40 Anteile des stickstofffreien Comonomeren zum Einsatz kommen.

Als Trägerstoffe für die unmittelbare oder mittelbare Ausrüstung mit den flockungsaktiven polykationischen Komponenten kommen beliebige unlösliche organische und/oder anorganische Trägermaterialien in Betracht, die praktisch auch beliebige Formgestaltung aufweisen können. In der bevorzugten Ausführungsform der Erfindung sind die Hilfsmittel der Erfindung pulvrig bis körnig, oder aber in Form von Faserstoffen ausgebildet. Pulvrig bis körniges Material hat in der Regel eine Teilchengröße nicht über 5 mm und insbesondere nicht etwa über 1 mm (durchschnittliche Teilchengröße). Im Durchschnitt der Teilchengröße wesentliche feinteiligerer Materialien können besonders geeignet sein beispielsweise solche des Bereiches von etwa 0,5 bis 0,001 mm durchschnittliche Teilchengröße. Je feiner die Teilchengröße wird, umso größer wird die dem Flockungsprozeß zur Verfügung gestellte Feststoffoberfläche - jeweils mengenmäßig gleiche Beträge des Flockungsmittels vorausgesetzt. Hieraus wird verständlich, daß insbesondere die feineren Materialien mit ihrer größeren Oberflächen bevorzugte Bedeutung haben können. Geeignete Oberflächen der Materialien liegen beispielsweise im Bereich von wenigstens etwa 0,1 m²/g, insbesondere im Bereich von wenigstens etwa 0,5 m²/g und bevorzugt bei wenigstens etwa 1 m²/g.

Als anorganische Trägermaterialien eignen sich zur Ausrüstung mit der flockungsaktiven polykationischen Ausrüstung alle anorganischen Komponenten hinreichender Unlöslichkeit in den zu klärenden Flüssigphasen. Das wesentliche Einsatzgebiet solcher Flockungshilfsmittel ist die Klärung von wässrigen Phasen, so daß also insbesondere hinreichend wasserunlösliche Mineralstoffe in dieser Klasse der anorganischen Trägermaterialien besondere Bedeutung haben können. Geeignet sind beispielsweise wasserunlösliche Silikatverbindungen wie Calcium-, Alumo-und/oder Magnesiumsilikate natürlichen und/oder synthetischen Ursprungs. In Betracht kommen hier insbesondere auch quellfähige Materialien von der Art natürlicher und/oder synthetischer montmorillonitartiger Verbindungen, ebenso wie nicht-quellende Alumosilikate von der Art synthetischer kristalliner Zeolithe, insbesondere der heute in großem Umfang eingesetzte Phosphataustauschstoff Zeolith A. Andere Beispiele für geeignete anorganische Materialien sind unter den Verfahrensbedingungen unlösliche Metalloxide und/oder Hydroxide bzw. entsprechende Metallsalze. Beispiele für Metalloxide bzw. Hydroxide sind etwa Kieselsäure, Aluminiumoxid, Magnesiumoxid und dergleichen. Als Beispiel für hinreichend wasserunlösliche Metallsalze sind Verbindungen wie Calciumcarbonat, Calciumsulfat und dergleichen zu nennen. Geeignete Trägermaterialien sind aber beispielsweise auch unlösliche mineralische Abfallstoffe aus technischen Verfahren, die bisher als unverwertbar angesehen und beispielsweise über Deponielagerung beseitigt werden. Ein besonderer Vorteil kann in der Verwendung von sauren bzw. polyanionisch ausgebildeten anorganischen Trägermaterialien liegen, wie sie beispielsweise im Fall der Alumosilikate, der Schichtsilikate oder des Kieselsäure-Gels gegeben sind. Auch hier ist durch die Möglichkeit der zusätzlichen ionischen Beeinflußung zwischen der flockungsaktiven polykationischen Beschichtungsmasse und dem anorganischen Grundkörper mit seiner gegensinnigen Ladung eine besonders feste Verankerung der flockungsaktiven Schicht gewährleistet.

Die quartäre Ammoniumgruppe in den erfindungsgemäß verwendeten flockungsaktiven Massen auf PQAV-Basis enthält bevorzugt 1 bis 3 niedere Alkylreste mit jeweils 1 bis 6, insbesondere 1 bis 3 und bevorzugt 1 bis 2 C-Atomen. Besondere Bedeutung kann der quartären Ammoniumgruppierung zukommen, die 1 bis 3 Alkylreste aufweist, die insbesondere Methyl-und/oder Ethylreste sind.

Als Gegen-Ion können die üblichen salzbildenden Gruppen vorliegen, wie sie aus der Herstellung solcher PQAV-Komponenten anfallen. Als Beispiele sind hier Chlorid und/oder Sulfat zu nennen.

In einer weiteren wichtigen Ausführungsform der Erfindung werden allerdings die Flockungs-und Filtrierhilfsmittel dadurch weitergehend modifiziert, daß vor ihrem Einsatz gezielt eine Konditionierung bzw. Aktivierung der Feststoffoberfläche vorgenommen wird. Hierzu wird von der Möglichkeit Gebrauch gemacht, die salzbildenden Gegenkomponenten zu den polykationischen Gruppierungen in der flockungsaktiven Schicht auszutauschen und damit gezielt neue funktionelle Elemente - über Salzbindung angebunden - in die flockungsaktive Schicht einzutragen.

In dieser Ausführungsform kann es besonders bevorzugt sein, den polykationischen Festkörper vor seinem Einsatz mit Netzmitteln zu behandeln. Geeignete Netzmittel sind tensidische Komponenten aus der Wasch-und Reinigungstechnik. Hierbei sind insbesondere anionische Tenside, nichtionische Tenside und/oder amphotere Tenside besonders geeignet.

Anionische Tenside bilden, wie bereits angegeben, mit quartären Ammoniumgruppierungen in stöchiometrischen Verhältnissen Salze. Gleichzeitig besteht aber nach der herrschenden Vorstellung die Möglichkeit, daß sich weitere tensidische Komponenten unter micellartiger Anlagerung an das salzartig gebundene Tensidmolekül anlagern. Bei den nicht hinreichend verfestigten polykationischen Komponenten - beispielsweise bei einer vorgebildeten polymerern PQAV - könnte das zur Wiederauflösung der flockungsaktiven Ausrüstung führen. In den erfindungsgemäßen Hilfsmitteln ist das nicht der Fall, weil das physikalische Zustandsbild durch die Hauptmasse des Formkörpers geprägt wird, der insbesondere durch seine Unlöslichkeit charakterisiert ist. Hier wird ersichtlich, daß sich über eine solche Reaktion der polykationischen Ausrüstung mit tensidischen Komponenten die Möglichkeit erschließt, variierte flockungsaktive Schichten zu schaffen, die neben ihrer elektrostatischen Wirksamkeit auf negativ aufgeladene Trübstoffe weiterführende Effekte entwickeln. Als Beispiel ist die Möglichkeit zu nennen, daß durch die erfindungsgemäßen Flockungsmittel nicht nur feste Trübstoffe im Sinne von Pigmentschmutz geflockt werden, sondern daß die Flockungshilfsmittel auch beträchtliche Mengen an oleophilen flüssigen Komponenten, insbesondere an dispergierten Fettstoffen auf der Oberfläche binden können.

Aber nicht nur anionische Tenside sind zur Modifikation der flockungsaktiven Schicht geeignet. Neben oder anstelle der anionischen Tenside sind insbesondere sogenannte Nonionics wirkungsvolle Modifizierungsmittel zur Beeinflussung der Wirksamkeit der erfindungsgemäßen neuen Hilfsmittel. Durch eine Vorbehandlung beispielsweise PQAV modifizierter unlöslicher Feststoffe mit beträchtlichen Mengen an Nonionics kann die Flockungsaktivität der auf diese Weise gebildeten Hilfsstoffe beträchtlich gesteigert werden.

Die zur Modifizierung eingesetzten Netzmittel können - bezogen auf die jeweils vorliegenden basischen, stickstoffenthaltenden Gruppen in unterstöchiometrischen Mengen oder auch in überstöchiometrischen Mengen eingesetzt werden. Bevorzugt werden wenigstens etwa 0,5 Äquivalente an tensidischer Komponente und insbesondere wenigstens etwa 0,9 Äquivalente an tensidischer Komponente - bezogen auf basischen Stickstoff - verwendet. Der Einsatz etwa stöchiometrischer Mengen kann zweckmäßig sein. Überstöchiometrische Mengen können bis zu einem Mehrfachen, beispielsweise bis zum 10-50fachen, vorzugsweise bis etwa zum 5fachen der stöchiometrischen Menge eingesetzt werden.

Eine besonders einfache Konditionierung des Flockungsmittels erhält man dadurch, daß man das beispielsweise körnige oder pulverförmige polykationisch ausgerüstete unlösliche Material in einer wässrigen Tensidlösung aufschlemmt, die die jeweils gewünschten Tensidkomponenten im Überschuß enthält und dann nach hinreichender Reaktionszeit - beispielsweise 10 bis 60 Minuten - die Feststoffphase von der wässrigen Phase abtrennt und gewünschtenfalls anschließend auswäscht. Die so gereinigten Komponenten können unmittelbar als Flockungshilfsmittel eingesetzt werden, sie können aber auch getrocknet werden, um dann zu einem späteren Zeitpunkt zum Einsatz zu kommen.

Wenn eine solche zusätzliche Konditionierung der flockungsaktiven Schicht mit Netzmitteln bzw. netzmittelartigen Verbindungen auch eine bevorzugte Ausführungsform darstellt, so ist diese weiterführende Behandlung jedoch keine zwingende Voraussetzung für die Wirksamkeit der erfindungsgemäßen Flockungshilfsmittel. Es werden im Gegenteil, beispielsweise mit tensidisch nicht vorbehandeltem PQAV-Komponenten der hier geschilderten Art, hervorragende Flockungswirkungen erzielt.

Die Agglomeration der Trübstoffteilchen an den erfindungsgemäßen Flockungsmitteln setzt den hinreichenden Kontakt zwischen Trübstoff und Flockungshilfsmittel voraus. Hier gelten die bekannten allgemeinen Gesetzmäßigkeiten. Sehr kleine Teilchen, insbesondere solche mit einem durchschnittlichen Teilchendurchmesser kleiner als 1 $\mu$m können schon durch die Brownsche Molekularbewegung in hinreichenden Kontakt mit suspendierten Flockungshilfsmitteln treten, im allgemeinen wird es jedoch zweckmäßig sein, eine gewisse Rühr-bzw. Bewegungsenergie in das zu enttrübende Flüssigsystem einzutragen. Es ist dabei nicht erforderlich, Mischungsvorgänge hoher Intensität einzustellen. Schon die vergleichsweise gemächliche Bewegung des Gesamtsystems führt zur angestrebten Flockung. Häufig kann der Flockungsprozeß durch Wärmeeintrag in das System gefördert werden. Dies ist jedoch nicht erforderlich, auch bei Raumtemperatur läßt sich die Flockung wirkungsvoll durchführen, wobei gegebenenfalls der Flockungseffekt nicht spontan eintritt sondern eine gewisse Zeitdauer der Flockungsbehandlung des Systems erfordert. So kann es in der Regel für die Flockung im wässrigen System zweckmäßig sein, das zu enttrübende System für den Zeitraum von 0,5 bis 45 Minuten, insbesondere für den Zeitraum von etwa 1 bis 30 Minuten, bei absatzweiser oder kontinuierlicher Vermischung zu bewegen. Als Temperaturbereich kommen beliebige Temperaturen zwischen dem Gefrierpunkt und dem Siedepunkt des wässrigen Systems in Betracht, bevorzugt sind Temperaturen von etwa 15 bis 65 °C.

Im wässrigen System liegen bevorzugt pH-Werte im Bereich von etwa 5 über neutral bis stark alkalisch vor, wobei der pH-Bereich von etwa 5,5 bis 13,5 besonders geeignet sein kann. Für die Anwendung der erfindungsgemäßen Flockungshilfsmittel erschließt sich damit der breite Bereich schwach saurer, neutraler, schwach alkalischer bis stark alkalischer wässriger Phasen mit Gehalten an Trübstoffen und partikulärem Schmutz. Die wässrigen Phasen können neben den ungelösten Trübstoffen zusätzlich gelöste anorganische und/oder organische Komponenten beliebiger Art enthalten, wobei aufgrund der komplexen Natur und des komplexen Wirkungsmechanismusses der erfindungsgemäßen Flockungsmittel weiterführende Reinigungsoperationen durch Interaktion mit den erfindungsgemäßen Flockungshilfsmitteln möglich sind. Verständlich wird dies am Beispiel tensidhaltiger wässriger Phasen. Je nach Beschaffenheit des eingesetzten unkonditionierten oder konditionierten Flockungshilfsmittels im Sinne der Erfindung können Interaktionen zwischen gelösten Tensiden und der flockungsaktiven Schicht eintreten. Hierdurch kann es zu einer substantiellen zusätzlichen Bindung gelöster Tenside in der flockungsaktiven Schicht des erfindungsgemäßen Mittels kommen, was zu einer entsprechenden Reinigung bzw. Verarmung der wässrigen Phase an Tensidgehalt führt. Im Sinne des erfindungsgemäßen Handelns kann dieser zusätzliche Reinigungseffekt ausgesprochen erwünscht sein.

Aber auch andere gelöste oder emulgierte Verunreinigungen können von den erfindungsgemäßen Flockungshilfsmitteln aufgenommen werden, die angepaßte Ausgestaltung des Flockungshilfsmittels vorausgesetzt. Erwähnt worden ist bereits die Möglichkeit der Ausgestaltung der erfindungsgemäßen Flockungshilfsmittel in der Art, daß gelöste und/oder emulgierte Fettanteile aus der zu reinigenden Flüssigphase gebunden werden können. Ein anderes Beispiel für solche Zusatzreinigungen sind die Aufnahme bzw. der Austausch von unerwünschten anionischen Säureresten aus der zu reinigenden Flüssigkeit. Werden beispielsweise Hilfsmittel der Erfindung durch Quaternierung von unlöslichen und/oder unlöslich gemachten Naturstoffen wie Cellulose, vernetztem Guar und dergleichen - bevorzugt bei zusätzlicher Vernetzung der flockungsaktiven Schicht mit Epichlorhydrin - hergestellt, dann enthält das ungelöste Flockungshilfsmittel der Erfindung im allgemeinen beträchtliche Mengen an gebundenen jedoch austauschbaren Chloridionen. Es hat sich überraschenderweise gezeigt, daß andere Säurereste, beispielsweise Nitrat, Phosphat und/oder Sulfat aus den zu reinigenden Flüssigphasen im Austausch gegen die Chloridionen vom erfindungsgemäßen Flockungshilfsmittel unter gleichzeitiger Freisetzung von Chlorid gebunden werden. Hier findet also zusätzlich zur Bindung des partikulären Schmutzes ein Anionenaustausch statt.

Ein besonders interessanter Vorteil für den Einsatz der erfindungsgemäßen Hilfsmittel kann in der guten Filtrierbarkeit der geflockten Fällungen gesehen werden, die sich insbesondere auch gerade mit tensidisch aktivierten Mitteln der geschilderten Art ausbildet. Lösliche Flockungshilfsmittel auf PQAV-Basis mit hohem Molekulargewicht sind zwar durchaus in der Lage, gute Flockungswirkungen einzustellen. Die Filtrierbarkeit solcher Phasen kann jedoch problematisch sein, insbesondere ist die rasche Verstopfung des Filterbettes zu befürchten. Demgegenüber zeichnen sich geflockte Phasen beim Einsatz der erfindungsgemäßen unlöslichen Flockungshilfsmittel in aller Regel durch verbesserte Filtrierbarkeit aus. Ein wichtiges Anwendungsgebiet für die neuen Mittel der Erfindung ist dementsprechend ihr Einsatz als Filtrationshilfsmittel, insbesondere bei Anwendungszwecken wie der bekannten Flockungsfiltration. Die Anwendung der erfindungsgemäßen Flockungs-und Filtrierhilfsmittel schränkt sich jedoch nicht auf wässrige Phasen ein. Mit Vorteil können diese Hilfsmittel auch zur Reinigung organischer Flüssigphasen und/oder organisch/wässriger Flüssigphasen eingesetzt werden. Entscheidend ist auch hier die Unlöslichkeit des Flockungshilfsmittels als Ganzes und insbesondere die Unlöslichkeit der flockungsaktiven Schicht in der von Trüb- und/oder größeren Feststoffen zu reinigenden organischen bzw. organisch/wässrigen Phase. Eine entsprechende Reinigungsbehandlung solcher Phasen kann anstelle von oder im Zusammenhang mit bisher üblichen Reinigungsoperationen -insbesondere der destillativen Reinigung der organischen Flüssigphase - zum Einsatz kommen.

Ein besonders interessantes Anwendungsgebiet erschließt sich für die neuen Hilfsmittel der Erfindung bei der Klärung von gelöste und ungelöste anorganische und/oder organische Komponenten enthaltenden, insbesondere wässrigen Phasen, die nicht nur von Trübstoffen und gröber partikulärem Schmutz gereinigt werden sollen, sondern für eine nachfolgende, weiterführende Abtrennung auch der gelösten Komponenten vorgesehen sind. Technologisch interessant ist heute hier die Reinigung der insbesondere wässrigen Lösung mittels Membrantechnologie. Bekannte Verfahren sind die Mikrofiltration und die Umkehrosmose. Die Störanfälligkeit solcher Reinigungsverfahren gegen Trübstoffbelastungen der zu behandelnden wässrigen Phase ist bekannt. Bis heute muß ein wesentlicher Prozentsatz des Arbeits-und Kapitalaufwandes für die vorbereitende Enttrübung der Flüssigphasen in Kauf genommen werden, um unerwünscht frühzeitige Störungen des Membranverfahrens durch Belegung bzw. Verstopfung der Membranen zu verhindern. Versuche mit den erfindungsgemäßen Flockungshilfsmitteln im Rahmen solcher vorbereitender Arbeiten für ein nachfolgendes Membrantrennverfahren haben gezeigt, daß hier mit einem geringen Arbeitsaufwand hervorragende Reinigungsergebnisse erhalten werden, die beispielsweise in der Umkehrosmose von - schwerbelasteten tensidischen Abwässern aus der gewerblichen Wäscherei zu bisher nicht für möglich gehaltenen Verfahrensvereinfachungen in einer nachfolgenden Umkehrosmose führen. Hier erschließen sich durch den Einsatz der erfindungsgemäßen Hilfsmittel beispielsweise für den Gewässerschutz oder für die Wiederverwendbarkeit von Brauchwasser in wasserarmen Regionen neue Möglichkeiten. Ein weiteres wichtiges Einsatzgebiet im hier zuletzt besprochenen Sinne liegt in der klärenden Vorbehandlung von Meer- und/oder Brackwasser zur nachfolgenden Gewinnung von Süßwasser bzw. Brauchwasser durch Umkehrosmose. Die Anwendung der neuen Flockungshilfsmittel ist auf diese speziellen Anwendungsgebiete jedoch keineswegs eingeschränkt, sie bringen verbesserte Arbeitsergebnisse im breiten Rahmen der Wasseraufbereitung, insbesondere der Trinkwasseraufbereitung, der Verwendung in kommunalen und/oder industriellen Kläranlagen, beim Einsatz im Bergbaugebiet, beispielsweise beim Kohlebergbau und/oder beim Erzbergbau, bei der Klärung von Salzlösungen, beispielsweise Kalisalzlösungen oder bei der Klärung von Rohsolen oder in ganz anderen industriellen Arbeitgebieten wie bei der Zuckersaftklärung, in der Metallgewinnung und Metallverarbeitung beispielsweise zur Verkürzung der Absetzzeit von Trüben, der Klärung von Elektrolyselaugen und dergleichen.


B e i s p i e l e

Beispiel 1

86 g (0,5 mol) feinpulvriger Cellulose (Feuchtigkeitsgehalt: ca. 6 Gew.-%) und 20 g Natriumhydroxid-Pulver wurden in einem mit Rückflußkühler, Thermometer, Gaseinleitungsrohr und Rührer ausgerüsteten 1-l-Dreihalskolben in 324 g tert.-Butanol suspendiert. Die Suspension wurde unter intensivem Rühren in einer Stickstoffatmosphäre mit 81 g einer ca. 58 gew.-%igen wässrigen Lösung von 3-Chlor-hydroxypropyltrimethylammoniumchlorid (Quab 188, DEGUSSA) innerhalb von 10 Minuten bei Raumtemperatur versetzt. 5 Minuten wurde nachgerührt. Anschließend wurde die Suspension auf 70 °C erhitzt und 3 Stunden bei dieser Temperatur gerührt.

Nach Abkühlen auf Raumtemperatur wurde die Suspension mit konzentrierter Salzsäure gegen Phenolphtalein neutralisiert. Das Cellulosederivat wurde abfiltriert, mehrfach mit 70 gew.-%igem wässrigem Isopropanol gewaschen und bei 60 °C im Vakuumtrockenschrank getrocknet.

Erhalten wurden ca. 84 g eines weißen Pulvers mit einem Stickstoffgehalt von ca. 0,65 Gew.-%, der einem Sustitutionsgrad (MS) von ca. 0,08 entspricht.

Die eingesetzten Reagenzmengen entsprechen einem mol-Verhältnis von Cellulose : Natriumhydroxid : Quab 188 von ca. 1 : 1 : 0,5.

Partikelschmutz und Trübstoffe enthaltender Zulauf zu einer kommunalen Kläranlage wird mit 0,5 % - bezogen auf wässrige Phase - des so hergestellten Cellulosederivates versetzt und für einen Zeitraum von etwa 5 bis 10 Minuten durch gelegentliches Umrühren vermischt. Die entstandene Flockung läßt sich durch einfaches Abgießen über ein Faltenfilter bei hohen Durchtrittsgeschwindigkeiten der Flüssigphase unter gleichzeitiger Gewinnung eines optisch klaren Filtrates abtrennen.

Eine andere Probe des getrockneten Feststoffes wird in einer wässrigen Lösung eines handelsüblichen Geschirrspülmittels (5 g/l) aufgeschlemmt, das überwiegend Aniontenside in Abmischung mit einer untergeordneten Menge an niotensidischen Komponenten enthält. Die pro Liter eingesetzte Feststoffmenge des getrockneten PQAV-Flockungsmittels beträgt etwa 1g/l Tensidlösung.

Das auf diese Weise konditionierte Flockungshilfsmittel zeichnet sich durch hohe Flockungs-und Koagulationsfähigkeit gegenüber partikulärem Schmutz und Trübstoff enthaltenden wässrigen Phasen beliebigen Ursprungs aus.

Beispiel 2

Beispiel 1 wurde wiederholt unter Einsatz von 30 g Natriumhydroxid-Pulver und 162 g Quab 188-Lösung (mol-Verhältnis ca. 1 : 1,5 : 1).

Erhalten wurden ca. 106 g quarternierte Cellulose mit einem Stickstoffgehalt von ca. 2,2, der einem Substitutionsgrad (MS) von ca. 0,33 entspricht.

Das Material ist sowohl in seinem Ursprungszustand wie nach tensidischer Modifikation hochflockungsaktiv gegenüber Trübstoffen und partikulärem Schmutz in wässrigen bzw. wässrig-tensidischen Phasen, insbesondere im neutral bis alkalischen Bereich.

Beispiel 3

91,6 g (0,5 mol) Guarmehl mit einem Feuchtigkeitsgehalt von 11,6 Gew.-% wurden in der im Beispiel 1 beschriebenen Apparatur zusammen mit 34,77 g Natriumhydroxid-Pulver in 324 g 87 gew.-%igem wässrigen tert.-Butanol suspendiert. Die Suspension wurde unter intensivem Rühren in einer Stickstoffatmosphäre mit 162 g Quab 188-Lösung innerhalb von 10 Minuten versetzt. 5 Minuten wurde nachgerührt. Dann wurden 8,1 g Epichlorhydrin zugegeben und die Suspension anschließend auf eine Temperatur von 70 °C, bei der sie 4 Stunden gerührt wurde, erwärmt.

Nach Abkühlen auf Raumtempertur wurde das Reaktionsgemisch mit konzentrierter Salzsäure gegen Phenophtalein neutralisiert. Das wasserunlösliche Guarderivat wurde abfiltriert, gründlich mit Wasser gewaschen, mit Aceton entwässert und bei 60 °C im Vakuum getrocknet.

Erhalten wurden 107.5 g eines gelblichen Pulvers, dessen Stickstoffgehalt von ca. 2,25 Gew.-% einem Substitutionsgrad (MS) von ca. 0,34 entspricht.

Die eingesetzten Reagenzmengen entsprechen einem mol-Verhältnis von Guarmehl : Natriumhydroxid : Quab 188 : Epichlorhydrin von ca. 1 : 1,74 : 1 : 0,175.

Im insbesondere stark alkalischen wässrigen Lösungen findet in Gegenwart dieses Materials eine intensive Flockung statt.

Beispiel 4

Beispiel 3 wurde wiederholt unter Einsatz von 32,75 g Natriumhydroxid-Pulver und 4,05 g Epichlorhydrin.

Die eingesetzten Reagenzmengen entsprechen einem mol-Verhältnis von Guarmehl : Natriumhydroxid : Quab 188 : Epichlorhydrin von ca. 1 : 1,64 : 1 : 0,088. Das resultierende wasserunlösliche Guarderivat hatte einen Stickstoffgehalt von 2,42 Gew.-%, der einem Substitutionsgrad (MS) von ca. 0,38 entspricht.

Beispiel 5

Mit dem Flockungshilfsmittel gemäß Beispiel 4 werden ohne vorherige tensidische Aktivierung die verschiedenartigsten verschmutzten bzw. getrübten Wasserproben behandelt. Dabei wird das Ausmaß der Trübung sowohl vor der Behandlung wie nach der Behandlung gemessen. Die Bestimmung der Trübungswerte erfolgt in einem Labor-Trübungsmeßgerät der Fa. MONITEK, Modell 251. Bestimmt werden dabei die Streulichtintensitäten proportional zur Konzentration suspendierter Teilchen einer Teilchengröße

oberhalb 0,2 μ (Vorwärtsstreuung). Die Trübungsmessung erfolgt durchweg bei Raumtemperatur.

Zur Reinigung der getrübten wässrigen Ausgangsmaterialien wird in allen Fällen das Flockungshilfsmittel in einer Menge von 1 g/l (0,1 Gew.-%) eingesetzt, die Reinigungsbehandlung erfolgt durch einfaches langsames Verrühren des Flockungshilfsmittels in der zu flockenden wässrigen Phase für den Zeitraum von 10 bis 15 Minuten bei Raumtemperatur.

a) Flußwasser aus dem belgischen Raum (Leie vor Gent)

Trübstoffgehalt (ppm) vor Klärung: 42,0

Trübstoffgehalt (ppm) nach Klärung: 2,5

b) Nordsee-Salzwasser aus dem unmittelbaren Küstenbereich entnommen

Trübstoffgehalt (ppm) vor Klärung: 270,0

Trübstoffgehalt (ppm) nach Klärung: 6,1

c) Probe aus Weiden-Entwässerungsgraben

Trübstoffgehalt (ppm) vor Klärung: 240,0

Trübstoffgehalt (ppm) nach Klärung: 8,8

## Beispiel 6

200 l eines üblichen Abflusses aus der gewerblichen Wäscherei werden mit dem Flockungshilfsmittel des Beispiels 4 behandelt. Im einzelnen gelten hierzu die folgenden Angaben:

Die behandelte Flüssigphase ist das hochverschmutzte tensidische Misch-Abwasser, das üblicherweise aus dem Wasserkreislauf der gewerblichen Waschanlage ausgeschleust und in die Kanalisation gegeben wird.

Die Behandlung dieses Abwassers erfolgt mit dem Flockungsmittel in einer Konzentration von 10 g (AS)/l tensidisches Abwasser. Die Reinigungsbehandlung wird durch einfaches Verrühren bei Raumtemperatur für den Zeitraum von 20 bis 30 Minuten vorgenommen, anschließend erfolgt eine Phasentrennung durch Filtration.

An der wässrigen Ausgangsphase und an der durch Reinigungsflockung mit nachfolgender Filtration erhaltenen wässrigen Phase werden bestimmt der Gehalt an Aniontensid (MBAS), der Gehalt an Niotensid (BiAS) sowie die organische Gesamtbelastung (CSB) - jeweils bestimmt in mg/l. Die bestimmten Werte sowie das Reinigungsergebnis Delta (%) sind in der nachfolgenden Tabelle zusammengefaßt.

## Tabelle 1

|  | Mischwasser (original) | Mischwasser (geflockt) | Delta(%) |
|---|---|---|---|
| MBAS | 17,5 mg/l | 0,07 mg/l | 99,6 |
| BiAS | 184,2 mg/l | 5,70 mg/l | 97,0 |
| CSB | 1840,0 mg/l | 453,0 mg/l | 76,4 |

An dem verschmutzten Mischwasser vor der Klärungsbehandlung und der durch erfindungsgemäße Behandlung gereinigten wässrigen Flotte werden weitere Untersuchungen zur Flottenbelastung vorgenommen und dabei die folgenden Werte festgestellt:

## Tabelle 2

|  | Mischwasser vor Behandlung | Mischwasser gereinigt |
|---|---|---|
| Salzgehalt (anorganisch) | 2,9 g/l Trockenrückstand | 1,8 g/l Trockenrückstand |
| Wasserhärte | 5 °dH | 1 °dH |
| pH-Wert | 11,0 | 9,5 |
| Phosphatgehalt (P Gesamt) | 100 mg/l | weniger als 5 mg/l |
| Nitratgehalt (mg/l $NO_3^-$) | 13 | nicht feststellbar |
| Sulfatgehalt (mg/l $SO_4^{2-}$) | 122 | 5 |

Beispiel 7

Flottenproben aus der Vorwäsche, der Klarwäsche und dem ersten, zweiten und dritten Spülbad aus der gewerblichen Wäscherei werden aus dem laufenden Betrieb einer technischen Großwaschanlage abgezweigt und bezüglich Trübung, Aussehen der Probe, Tensidgehalt und organischer Gesamtbelastung bestimmt.

Repräsentative Proben der jeweiligen Flotten werden dem Versuch der Reinigung durch Umkehrosmose unterworfen. Sowohl an den dabei erhaltenen Konzentraten wie an den entsprechenden Permeaten werden vergleichende Bestimmungen vorgenommen.

Unabhängig davon werden weitere repräsentative Proben der abgezogenen Flottenfraktion mit dem Flockungshilfsmittel des Beispieles 4 in Mengen von 5 bis 10 g/l unter den in Beispiel 6 genannnten Bedingungen behandelt und die angefallene Flockung durch Filtration von der Flüssigphase abgetrennt. Auch an diesen Flüssigphasen werden die eingangs genannten Werte bestimmt.

Die Gesamtheit der Meßergebnisse ist in der nachfolgenden Tabelle 3 zusammengefaßt.

## Tabelle 3

| Behandlung | Probe | Trübung (ppm) bez. auf Kieselgureichung | Aussehen der Probe | MBAS (mg/l) Aniontensid | CSB (mg/l) Org. Gesamt-belastung | BiAS (mg/l) Niotensid |
|---|---|---|---|---|---|---|
| unbehandelt | Vorwäsche | 0 | dunkelgrau,trüb | 28,8 | 3801 | 428,6 |
| (Original) | Klarwäsche | 1000 | dunkelgrau,trüb | 23,4 | 3441 | 443,2 |
| | 1. Spülbad | 830 | grau, trüb | 3,7 | 951 | 115,6 |
| | 2. Spülbad | 335 | hellgrau, trüb | 1,8 | 332 | 22,7 |
| | 3. Spülbad | 120 | hellgrau, trüb | 0,44 | 153 | 1,9 |
| Rückstand bei | Vorwäsche | | braun, trüb | 51,2 | 7578 | 1001,1 |
| der Umkehros- | Klarwäsche | | dunkelgrau,trüb | 55,4 | 8568 | 1361,2 |
| mose (Konzen- | 1. Spülbad | | graubraun, trüb | 15,4 | 1802 | 324,0 |
| trat) | 2. Spülbad | | hellbraun, trüb | 3,9 | 857 | 32,0 |
| | 3. Spülbad | | fast klar | 0,24 | 172 | 3,3 |

| | | | | | | |
|---|---|---|---|---|---|---|
| durch Umkehr-<br>osmose behan-<br>deltes Wasser<br>(Permeat) | Vorwäsche | | hellgrau, trüb | 14,7 | 647 | 49,1 |
| | Klarwäsche | | hellgrau, trüb | 5,9 | 343 | 21,0 |
| | 1. Spülbad | | klar | 0,02 | 0 | 0,27 |
| | 2. Spülbad | | klar | 0,01 | 2 | 0,36 |
| | 3. Spülbad | | klar | 0 | 0,8 | 0,36 |
| mit Fänger be-<br>handeltes<br>Wasser | Vorwäsche | 100 | hellgrau, trüb | 4,1 | 1409 | 159,0 |
| | Klarwäsche | 4,8 | klar | 6,1 | 1452 | 301,0 |
| | 1. Spülbad | 8,6 | klar | 0,3 | 179 | 104,0 |
| | 2. Spülbad | 16,0 | klar | 0,04 | 104 | 1,6 |
| | 3. Spülbad | 11,0 | klar | 0,01 | 81 | 0,4 |

0 273 335

Beispiel 8

Unbehandeltes Mischwasser aus der gewerblichen Wäscherei gemäß Beispiel 6 sowie mit 1 % des erfindungsgemäßen Flockungshilfsmittels aus Beispiel 4 behandeltes Mischwasser werden einer Reinigung durch Umkehrosmose unterworfen. Die dabei erhaltenen Ergebnisse sind in der nachfolgenden Tabelle 4 zusammengestellt.

## Tabelle 4

|  | MBAS (mg/l) | BiAS (mg/l) | CSB (mg $O_2$/l) |
|---|---|---|---|
| 1) Mischwasser unbehandelt | 17,5 | 184,2 | 1840 |
| 2) Mischwasser behandelt mit 1% Flockungshilfsmittel | 0,07 | 5,7 | 453 |

|  | Menge | Leistung | MBAS | BiAS | CSB |
|---|---|---|---|---|---|
| Permeat von 2) wasserklar | 94,5 % | $50 - 31,2 \frac{l}{m^2 \cdot h}$ (wie Wasser) | 0,1 | 0,17 | 31 |
| Permeat von 1) wasserklar | 73,5 % | $33 - 7,2 \frac{l}{m^2 \cdot h}$ | 0,61 | 0,94 | 53 |
| Konzentrat von 2) trüb mit Schwebstoffen | 5,5 % |  | 0,39 | 13,0 | 1227 |
| Konzentrat von 1) schwarz, trüb | 26,5 % |  | 36,1 | 403,4 | 3070 |

0 273 335

Beispiel 9

Beispiel 1 wurde wiederholt unter Verwendung von 16 g Natriumhydroxid-Pulver und 48,6 g Quab 188-Lösung.

Die eingesetzten Reagenzmengen entsprechen einem mol-Verhältnis von Cellulose : Natriumhydroxid : Quab 188 von ca. 1 : 0,8 : 0,3.

Erhalten wurden 80 g eines weißen, feinpulvrigen Pulvers mit einem Stickstoffgehalt von 0,24, der einem Substitutionsgrad (MS) des Cellulosederivates von ca. 0,03 entspricht.

Das Material eignet sich im ursprünglich hergestellten Zustand ebenso wie nach der Aktivierung mit wässrig tensidischer Lösung zur Flockung und Klärung von Trüben wässriger und/oder organischer Phasen.

**Ansprüche**

1. Flockungs-und Filtrierhilfsmittel zur erleichterten Abtrennung von Trübstoffen und partikulären Feststoffen aus Flüssigphasen auf Basis polykationischer Polymerverbindungen, dadurch gekennzeichnet, daß die Hilfsmittel in den zu klärenden Flüssigphasen wenigstens weitgehend unlösliche Feststoffe sind, die wenigstens an ihrer Oberfläche eine polykationische Ausrüstung aufweisen und dabei als Feststoffpartikel solcher Größe vorliegen, daß eine Mehrzahl der abzutrennenden Trübstoffteilchen bzw. partikulären Verunreinigungen auf der Oberfläche eines polykationischen Partikels gebunden werden kann.

2. Flockungs-und Filtrierhilfsmittel nach Anspruch 1, dadurch gekennzeichnet, daß sie wenigstens an ihrer Partikeloberfläche eine Vielzahl flockungsaktiver quartärer Ammoniumgruppen und/oder basischer Aminogruppen immobilisiert enthalten.

3. Flockungs-und Filtrierhilfsmittel nach Ansprüchen 1 und 2, dadurch gekennzeichnet, daß die flockungsaktiven Gruppen durch chemische und/oder physikalische Bindung an unlöslichen Trägerstoffen immobilisiert sind.

4. Flockungs-und Filtrierhilfsmittel nach Ansprüchen 1 bis 3, dadurch gekennzeichnet, daß sie die wenigstens weitgehend immobilisierte polykationische flockungsaktive Ausrüstung auf einem inerten Träger enthalten.

5. Flockungs-und Filtrierhilfsmittel nach Ansprüchen 1 bis 4, dadurch gekennzeichnet, daß sie die immobilisierte polykationische Ausrüstung in dünner Schicht auf feinteiligen, insbesondere pulvrig bis körnigen organischen und/oder anorganischen Trägern enthalten, die in den zu behandelnden Flüssigphasen auch unter den Behandlungsbedingungen unlöslich sind.

6. Flockungs-und Filtrierhilfsmittel nach Ansprüchen 1 bis 5, dadurch gekennzeichnet, daß sie als Feststoffe ausgebildet sind, an deren Oberfläche eine Vielzahl der flockungsaktiven Gruppen, insbesondere quartärer Ammoniumgruppierungen chemisch gebunden ist.

7. Flockungs-und Filtrierhilfsmittel nach Ansprüchen 1 bis 6, dadurch gekennzeichnet, daß die Trägerstoffe an ihrer Oberfläche mit vorgebildeten polykationischen Polymerverbindungen ausgerüstet sind, die dort auch unter Arbeitsbedingungen wenigstens weitgehend immobilisiert sind, wobei als flockungsaktive Polymerverbindungen insbesondere entsprechende polyfunktionelle quartäre Ammoniumverbindungen (PQAV) vorliegen.

8. Flockungs-und Filtrierhilfsmittel nach Ansprüchen 1 bis 7, dadurch gekennzeichnet, daß die Fixierung der flockungsaktiven Ausrüstung auf der Oberfläche des Trägers mit vorgebildeten polykationischen Komponenten durch Anbindung über Salzgruppen und/oder durch Molekülvergrößerung bis zur hinreichenden Unlöslichkeit - insbesondere durch Reaktion mit Vernetzungsmitteln - ausgebildet ist.

9. Flockungs-und Filtrierhilfsmitteln nach Ansprüchen 1 bis 8, dadurch gekennzeichnet, daß die flockungsaktive Ausrüstung durch chemische Anbindung der kationischen Gruppen an die Trägeroberfläche und zusätzliche Vernetzung wenigstens der die flockungsaktive Ausrüstung enthaltenden Materialschicht ausgebildet ist.

10. Flockungs-und Filtrierhilfsmittel nach Ansprüchen 1 bis 9, dadurch gekennzeichnet, daß sie sich von unlöslichen und/oder unlöslich gemachten Naturstoffen und/oder Syntheseprodukten ableiten, die an ihrer Oberfläche mit der flockungsaktiven Ausrüstung versehen sind.

11. Flockungs-und Filtrierhilfsmittel nach Ansprüchen 1 bis 10, dadurch gekennzeichnet, daß sie auf Basis Cellulose bzw. unlöslichen Cellulosederivaten und/oder anderen entsprechenden polysaccharidartigen Naturstoffen bzw. Naturstoffderivaten ausgebildet sind.

12. Flockungs-und Filtrierhilfsmittel nach Ansprüchen 1 bis 10, dadurch gekennzeichnet, daß als Träger für die flockungsaktive Ausrüstung anorganische Materialien, insbesondere natürliche und/oder synthetische unlösliche Mineralstoffe, z. B. Alumosilikate, Schichtsilikate, Metalloxide wie Kieselsäure oder Aluminiumoxid bzw. unlösliche Salze wie Erdalkalicarbonate oder -sulfate vorliegen.

13. Flockungs-und Filtrierhilfsmitteln nach Ansprüchen 1 bis 12, dadurch gekennzeichnet, daß wenigstens ihre polykationisch ausgerüstete Oberfläche durch Behandlung mit Netzmitteln und/oder netzmittelartigen Verbindungen aktiviert ist.

14. Flockungs-und Filtrierhilfsmittel nach Ansprüchen 1 bis 13, dadurch gekennzeichnet, daß sie durch Behandlung mit anionischen, nichtionischen und/oder zwitterionischen Tensiden bzw. tensidartigen Komponenten aktiviert sind.

15. Flockungs-und Filtrierhilfsmittel nach Ansprüchen 1 bis 14, dadurch gekennzeichnet, daß sie das flockungsaktive Material in dünner Schichtstärke, bevorzugt bei einer durchschnittlichen Schichtstärke von nicht mehr als 1 mm und insbesondere bei nicht mehr als 0,5 mm an der Oberfläche enthalten.

16. Flockungs-und Filtrierhilfsmittel nach Ansprüchen 1 bis 15, dadurch gekennzeichnet, daß sie als pulver-bis kornförmiges Material mit einer durchschnittlichen Teilchengröße nicht oberhalb etwa 5 mm, vorzugsweise im Bereich bis 1 mm und darunter, vorliegen.

17. Verwendung der Flockungs-und Filtrierhilfsmittel nach Ansprüchen 1 bis 16 zur Gewinnung optisch praktisch klarer Flüssigphasen.

18. Ausführungsform nach Anspruch 17, dadurch gekennzeichnet, daß die Flockungs-und Filtrierhilfsmittel zur Klärung von gelöste und ungelöste anorganische und/oder organische Komponenten enthaltenden, insbesondere wässrigen Phasen eingesetzt werden, insbesondere zu deren Vorbereitung für nachfolgende weiterführende Trennungsschritte der gelöste Komponenten enthaltenden wässrigen Flüssigkeiten mittels Membrantechnologie wie Mikrofiltration und Umkehrosmose.

19. Ausführungsform nach Ansprüchen 17 und 18, dadurch gekennzeichnet, daß die Flockungs-und Filtrierhilfsmittel zusätzlich zur Absorption gelöster und/oder emulgierter Komponenten aus der zu reinigenden Flüssigphase eingesetzt werden.

20. Verwendung der Flockungs-und Filtrierhilfsmittel nach Ansprüchen 1 bis 16 zur Reinigung organischer bzw. organisch/wässriger Flüssigphasen.